(19) Europäisches Patentamt
European Patent Office
Office européen des brevets

(11) **EP 4 535 594 A1**

(12) **EUROPEAN PATENT APPLICATION**
published in accordance with Art. 153(4) EPC

(43) Date of publication:
09.04.2025 Bulletin 2025/15

(51) International Patent Classification (IPC):
*H02J 3/48* (2006.01)

(21) Application number: 23881356.2

(22) Date of filing: 28.07.2023

(86) International application number:
PCT/CN2023/109819

(87) International publication number:
WO 2024/087768 (02.05.2024 Gazette 2024/18)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.10.2022 CN 202211319731

(71) Applicant: Beijing Goldwind Science & Creation
Windpower Equipment Co., Ltd.
Beijing 100176 (CN)

(72) Inventors:
• YU, Xiao
  Beijing 100176 (CN)
• YANG, Zhiqian
  Beijing 100176 (CN)
• GUO, Rui
  Beijing 100176 (CN)
• JING, Shuang
  Beijing 100176 (CN)
• LI, Feng
  Beijing 100176 (CN)

(74) Representative: Hoffmann Eitle
Patent- und Rechtsanwälte PartmbB
Arabellastraße 30
81925 München (DE)

(54) **GRID FORMING TYPE WIND GENERATING SET AND CONTROL METHOD THEREFOR, AND CONTROLLER**

(57) The present disclosure discloses a grid-forming wind turbine and a control method therefor, and a controller, belonging to the field of wind power generation. The grid-forming wind turbine comprises: a generator; a generator-side converter electrically connected to the generator; a grid-side converter electrically connected to the generator-side converter by a direct-current bus; and an energy storage device connected to the direct-current bus. A control module in the grid-side converter generates a pulse width modulation signal using a frequency reduced active power control closed loop and a frequency reduced reactive power control closed loop which have cut-off frequencies less than or equal to a first preset value. Power switch devices in the grid-side converter are switched on or off under the control of the pulse width modulation signal, so that a change value of output internal potential voltage of the grid-side converter in a cut-off period is less than or equal to a stable change threshold. When a frequency of a power grid attenuates, the energy storage device is passively discharged to provide active output.

Generate a pulse width modulation signal based on a frequency reduced active power control closed loop and a frequency scaling down reactive power control closed loop — S301

Control the power switch devices in the grid-side converter to be turned on or off based on the pulse width modulation signal, so that a change value of output internal potential voltage of the grid-side converter in a cut-off period is less than or equal to a preset stable change threshold — S302

Provide active output for the power grid by passive discharge of the energy storage device in the case that a frequency of a power grid attenuates — S303

Fig. 6

EP 4 535 594 A1

**Description**

**CROSS REFERENCE TO RELATED DISCLOSURE**

The present disclosure claims priority to Chinese Patent Disclosure No. 202211319731.3, entitled "GRID-FORMING WIND TURBINE CONTROL METHOD THEREFOR, AND CONTROLLER" filed on October 26, 2022, which is incorporated herein by reference in its entirety.

**TECHNICAL FIELD**

The present disclosure belongs to the field of wind power generation, and in particular, relates to a grid-forming wind turbine, a control method therefor, and a controller.

**BACKGROUND**

A wind turbine is an apparatus that can convert wind energy into electrical energy. The electrical energy generated by the wind turbine can be transmitted to a power grid through a transmission network for distribution and use. The speed and active output of the wind turbine can be adjusted based on changes in wind speed to output electrical energy. However, in the case that frequency attenuation occurs in the power grid, the wind turbine cannot provide inertia and frequency support for the power grid, resulting in poor stability of a wind power generation system including the wind turbine.

**SUMMARY**

Embodiments of the present disclosure provide a grid-forming wind turbine and a control method therefor, and a controller, which can improve the stability of a wind power generation system including the wind turbine.

In the first aspect, embodiments of the present disclosure provide a grid-forming wind turbine, including: a generator; a generator-side converter electrically connected to the generator; a grid-side converter electrically connected to the generator-side converter by a direct-current bus; and an energy storage device connected to the direct-current bus for charging or discharging. The grid-side converter includes: a control module, configured to generate a pulse width modulation signal based on a frequency reduced active power control closed-loop and a frequency reduced reactive power control closed-loop, where a cut-off frequency of the frequency reduced active power control closed-loop and a cut-off frequency of the frequency reduced reactive power control closed-loop are less than or equal to a first preset value; and a power switch module, including multiple power switch devices, which are turned on or off under the control of the pulse width modulation signal, so that a change value of output internal potential voltage of the grid-side converter within a cut-off period is less than or equal to a preset stable change threshold. In the case that a frequency of a power grid attenuates, the energy storage device is passively discharged to provide active output for the power grid. The power grid is electrically connected to the grid-forming wind turbine, and the stable change threshold is a change value threshold used for representing and determining whether the output internal potential voltage is stable.

In the second aspect, embodiments of the present disclosure provide a control method for a grid-forming wind turbine, applied to the grid-side converter in the grid-forming wind turbine in the first aspect, the grid-forming wind turbine being configured to be electrically connected to a power grid, the control method including: generating a pulse width modulation signal based on a frequency reduced active power control closed-loop and a frequency reduced reactive power control closed-loop, where a cut-off frequency of the frequency reduced active power control closed-loop and a cut-off frequency of the frequency reduced reactive power control closed-loop are less than or equal to a first preset value; controlling the power switch devices in the grid-side converter to be turned on or off based on the pulse width modulation signal, so that a change value of output internal potential voltage of the grid-side converter within a cut-off period is less than or equal to a preset stable change threshold, where the stable change threshold is a change value threshold used for representing and determining whether the output internal potential voltage is stable; and providing active output for the power grid by passive discharge of the energy storage device in the case that a frequency of the power grid attenuates.

In the third aspect, embodiments of the present disclosure provide a controller for a grid-side converter, including: a processor and a memory storing computer program instructions, where when the processor executes the computer program instructions, the control method for the wind turbine in the second aspect is implemented.

Embodiments of the present disclosure provide a grid-forming wind turbine and a control method therefor, and a controller. The grid-forming wind turbine includes a generator, a generator-side converter, a grid-side converter, and an energy storage device. The grid-side converter includes a control module and a power switch module, and the power switch module includes multiple power switch devices. The control module can generate a pulse width modulation signal based on a frequency reduced active power control closed-loop and a frequency reduced reactive power control closed-loop. The pulse width modulation signal can control the power switch devices to be switched on or off, so that a change value of output internal potential voltage of the grid-side converter within a cut-off period is less than or equal to a stable change threshold, that is, the output internal potential voltage of the grid-side converter can remain stable in the cut-off period. The cut-off frequency of the frequency reduced active power control closed-loop and the cut-off frequency of the frequency reduced reactive power control closed-loop are less than or equal to a first preset value. Correspondingly, the duration of the cut-off period increases. In the case that the frequency of a power grid attenuates, the voltage difference between the grid-forming wind turbine and the power grid increases. Due to the physical characteristics of structures between the grid-forming wind turbine and the power grid, the energy storage device is passively discharged to provide active output for the power grid, thereby providing frequency and inertia support for the power grid and improving the stability of a wind power generation system including the wind turbine.

## BRIEF DESCRIPTION OF THE DRAWINGS

In order to explain the technical solutions of the embodiments of the present disclosure more clearly, the accompanying drawings required for use in the embodiments of the present disclosure will be briefly introduced below. Those of ordinary skill in the art can derive other drawings based on the accompanying drawings without any creative effort.

Fig. 1 is a schematic diagram of a grid-forming wind turbine provided in an embodiment of the present disclosure;
Fig. 2 is a logical schematic diagram of an example of an active power control closed-loop provided in an embodiment of the present disclosure;
Fig. 3 is a logical schematic diagram of an example of a reactive power control closed-loop provided in an embodiment of the present disclosure;
Fig. 4 is a schematic diagram of a grid-forming wind turbine provided in another embodiment of the present disclosure;
Fig. 5 is a schematic diagram of a grid-forming wind turbine provided in still another embodiment of the present disclosure;
Fig. 6 is a flowchart of a control method for a grid-forming wind turbine provided in an embodiment of the present disclosure;
Fig. 7 is a flowchart of a control method for a grid-forming wind turbine provided in another embodiment of the present disclosure; and
Fig. 8 is a schematic diagram of a controller for a grid-side converter provided in an embodiment of the present disclosure.

## DETAILED DESCRIPTION

Features and exemplary embodiments of various aspects of the present disclosure will be described in detail below. In order to make the objectives, technical solutions, and advantages of the present disclosure clearer, the present disclosure will be further described in detail below with reference to the accompanying drawings and specific embodiments. It should be understood that the specific embodiments described here are only intended to explain the present disclosure, but not to limit the present disclosure. For those skilled in the art, the present disclosure can be implemented without some of these specific details. The following descriptions of the embodiments are merely to provide a better understanding of the present invention by showing examples of the present invention.

A wind turbine is an apparatus that can convert wind energy into electrical energy. The electrical energy generated by the wind turbine can be transmitted to a power grid through a transmission network for distribution and use by the power grid. The speed and active output of the wind turbine can be adjusted according to changes in wind speed to output electrical energy. However, in the case that frequency attenuation occurs in the power grid, wind turbine cannot provide inertia and frequency support for the power grid, resulting in poor stability of a wind power generation system including the wind turbine.

Embodiments of the present disclosure provide a grid-forming wind turbine and a control method therefor, and a controller. The grid-forming wind turbine has self-synchronous grid characteristics and can exhibit voltage source control characteristics to the outside. In an off-grid scenario, the grid-forming wind turbine can serve as a voltage source to supply power to some electrical devices. In a grid-connected scenario, the grid-forming wind turbine can provide inertia and frequency support for a power grid connected to the wind turbine. In the embodiments of the present disclosure, a pulse width modulation signal for controlling power switch devices in a grid-side converter is generated based on a frequency reduced active power control closed-loop and a frequency reduced reactive power control closed-loop, so that the fluctuation of the output internal potential voltage of the grid-side converter is minimized. In the case that the frequency of the power grid attenuates, the difference between the output internal potential voltage of the grid-side converter and the voltage of the power grid increases. According to the physical characteristics of connection structures between the grid-forming wind turbine and the power grid, the grid-forming wind turbine will provide active output for the power grid by its energy storage device, to provide inertia and frequency support for the power grid, thereby improving the stability of a wind power generation system including the wind turbine.

The following introduces the grid-forming wind turbine and the control method therefor, and the controller provided in the present disclosure, respectively.

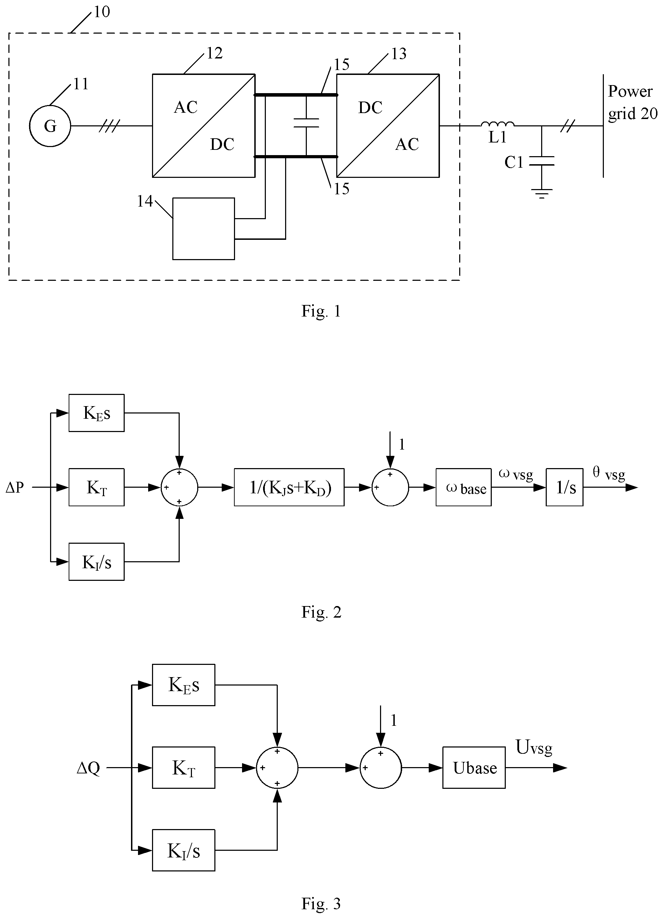

The first aspect of the present disclosure provides a grid-forming wind turbine. Fig. 1 is a schematic diagram of a grid-forming wind turbine provided in an embodiment of the present disclosure. As shown in Fig. 1, the grid-forming wind turbine 10 includes a generator 11, a generator-side converter (AC/DC) 12, a grid-side converter (DC/AC) 13, and an energy storage device 14. The grid-forming wind turbine 10 may be electrically connected to a power grid 20.

The generator-side converter 12 is electrically connected to the generator 11. The grid-side converter 13 is electrically connected to the generator-side converter 12 through a direct-current(DC) bus 15. The energy storage device 14 is connected to the direct-current bus 15, and the energy storage device 14 can be charged or discharged. The grid-side converter 13 may be configured to be electrically connected to the power grid 20. Inductors, capacitors, and resistors and other structures may be installed between the grid-side converter 13 and the power grid 20. For example, as shown in Fig. 1, an inductor L1 and a capacitor C1 or other structures may be provided between the grid-side converter 13 and the power grid 20, which will not be listed one by one here.

The generator-side converter 12 can convert electrical energy generated by the generator 11 into direct-current electrical energy and transmit the direct-current electrical energy to the grid-side converter 13 through the direct-current bus 15, and then the grid-side converter 13 converts the transmitted direct-current electrical energy into alternating-current electrical energy and transmits the alternating-current electrical energy to the outside. In some cases, the DC power converted and transmitted by the generator-side converter 12 to the direct-current bus 15 can charge the energy storage device 14. In some cases, the energy storage device 14 can be discharged, the electrical energy released by the energy storage device 14 can be transmitted to the grid-side converter 13 through the direct-current bus 15, converted by the grid-side converter 13 and then provided to the power grid 20, and the electrical energy released by the energy storage device 14 can be used as active output.

The grid-side converter 13 may include a control module and a power switch module.

The control module may be configured to generate a pulse width modulation signal based on a frequency reduced active power control closed-loop and a frequency reduced reactive power control closed-loop. A control phase required for modulating the pulse width modulation signal can be obtained based on the frequency reduced active power control closed-loop, and a control amplitude required for modulating the pulse width modulation signal can be obtained based on the frequency reduced reactive power control closed-loop. The frequency reduced here refers to reduction of a cut-off frequency of the active power control closed-loop and reduction of a cut-off frequency of the reactive power control closed-loop. The cut-off frequency of the active power control closed-loop is a cut-off frequency of a transfer function of the active power control closed-loop, also known as a bandwidth frequency. Similarly, the cut-off frequency of the reactive power control closed-loop is a cut-off frequency of a transfer function of the reactive power control closed-loop, also known as a bandwidth frequency. The bandwidth frequency refers to a frequency at which the amplitude-frequency characteristic of the closed-loop is controlled to decrease to -3 decibels (dB). The higher the cut-off frequency, the faster the dynamic change of the system, and the poorer the anti-interference performance. In the embodiments of the present disclosure, the cut-off frequency of the frequency reduced active power control closed-loop and the cut-off frequency of the frequency reduced reactive power control closed-loop are less than or equal to a first preset value, such as 10 hertz. In order to further improve the stability of a wind power generation system including the wind turbine, the cut-off frequency of the frequency reduced active power control closed-loop and the cut-off frequency of the frequency reduced reactive power control closed-loop may be less than or equal to a second preset value, such as 5 Hz.

The power switch module includes a plurality of power switch devices, which can be turned on or off under the control of the pulse width modulation signal generated by the control module, so that a change value of output internal potential voltage of the grid-side converter 13 within a cut-off period is less than a stable change threshold. In the case that the frequency of the power grid 20 attenuates, the energy storage device 14 is passively discharged to provide active output for the power grid 20.

The cut-off period is negatively correlated with the cut-off frequency of the active power control closed-loop and the cut-off frequency of the reactive power control closed-loop. The lower the cut-off frequencies, the longer the cut-off period. The grid-side converter 13 responds once every cut-off period to adjust its output internal potential voltage. The change value of the output internal potential voltage of the grid-side converter 13 in the same cut-off period is very small and relatively stable, that is, the change value of the output internal potential voltage of the grid-side converter 13 in the same cut-off period is less than or equal to the preset stable change threshold. The change value of the output internal potential voltage of the grid-side converter 13 is an absolute value of a change of the output internal potential voltage of the grid-side converter 13. The stable change threshold is a change value threshold for determining whether the output internal potential voltage is stable. If the change value of the output internal potential voltage of the grid-side converter 13 in the same cut-off period is less than or equal to the stable change threshold, it indicates that the output internal potential voltage of the grid-side converter 13 during the cut-off period remains stable. If the change value of the output internal potential voltage of the grid-side converter 13 in the same cut-off period is greater than the stable change threshold, it indicates that the output internal potential voltage of the grid-side converter 13 during the cut-off period does not remain stable. The stable change threshold can be set according to the scenario, demand, experience, etc., which is not limited here. For example, the stable change threshold may be 0.01 per unit (p.u).

If both the cut-off frequency of the active power control closed-loop and the cut-off frequency of the reactive power control closed-loop decrease, the corresponding cut-off period increases, that is, the dynamic change of the system slows down and the anti-interference performance increases. Within the same cut-off period, even if the frequency of the power grid 20 attenuates, the output internal potential voltage of the grid-side converter 13 remains stable, and the voltage difference between the grid-side converter 13 and the power grid 20 increases. In the presence of an inductor, a capacitor, a resistor, etc. between the grid-side converter 13 and the power grid 20, due to the characteristics of inductive elements, in the case that the voltage difference between the grid-side converter 13 and the power grid 20 increases, the grid-forming wind turbine 10 will passively provide active output for the power grid 20. The active output provided for the power grid 20 by the grid-forming wind turbine 10 includes active output provided for the power grid 20 by passive discharge of the energy storage device 14. Here, the active output is referred to as active power.

In the case that the frequency of the power grid 20 does not attenuate and the electrical energy generated by the generator 11 is sufficient, the energy storage device 14 can obtain the electricity by the direct-current bus 15, i.e., achieve charging, and the stored electricity can be discharged when needed.

In the embodiments of the present disclosure, the grid-forming wind turbine includes a generator 11, a generator-side converter 12, a grid-side converter 13, and an energy storage device 14. The grid-side converter 13 includes a control module and a power switch module, and the power switch module includes multiple power switch devices. The control module can generate a pulse width modulation signal based on a frequency reduced active power control closed-loop and a frequency reduced reactive power control closed-loop. The pulse width modulation signal can control the power switch devices to be turned on or off, so that a change value of output internal potential voltage of the grid-side converter 13 in a cut-off period is less than or equal to a stable change threshold, that is, the output internal potential voltage of the grid-side converter 13 can remain stable in the cut-off period. The cut-off frequency of the frequency reduced active power control closed-loop and the cut-off frequency of the frequency reduced reactive power control closed-loop are less than or equal to a first preset value. Correspondingly, the duration of the cut-off period increases. In the case that the frequency of the power grid 20 attenuates, the voltage difference between the grid-forming wind turbine 10 and the power grid 20 increases. Due to the physical characteristics of structures between the grid-forming wind turbine 10 and the power grid 20, the energy storage device 14 is passively discharged to provide active output for the power grid 20, thereby providing frequency and inertia support for the power grid 20 and improving the stability of a wind power generation system including the wind turbine. Moreover, because the energy storage device 14 provides active output to the power grid 20 passively, instruction control is not required, the time for instruction control can be saved, and the speed of providing frequency and inertia support to the power grid 20 can be improved.

In some embodiments, the above control module may include a processing unit and a modulation unit.

The processing unit may be configured to process a difference between a given active power value and an actual active power value output by the grid-side converter 13 based on the frequency reduced active power control closed-loop to obtain a control phase, and process a difference between a given reactive power parameter value and an actual reactive power parameter value output by the grid-side converter 13 based on the frequency reduced reactive power control closed-loop to obtain a control amplitude.

The active power control closed-loop controls active power based on the given value of the active power and the measured actual value of the active power output by the grid-side converter 13. The active power control closed-loop can process the difference between the given value of the active power and the actual value of the active power to obtain the control phase. The reactive power control closed-loop controls reactive power based on the given value of the reactive power and the actual value of the reactive power parameter output by the grid-side converter 13. The reactive power control closed-loop can process the difference between the given value of the reactive power and the actual value of the reactive power to obtain the control amplitude.

In some examples, the active power control closed-loop may include a first proportional integral derivative (PID) control unit and a low-pass filter. The low-pass filter may include a first-order low-pass filter or a second-order low-pass filter. Fig. 2 is a logical schematic diagram of an example of an active power control closed-loop provided in an embodiment of the present disclosure. As shown in Fig. 2, the difference $\Delta P$ between the given value of the active power and the actual value of the active power can be input into the first proportional integral derivative control unit for proportional integral derivative processing. In Fig. 2, $K_E$s represents integral processing, involving an integral coefficient $K_E$; $K_T$ represents proportional processing, involving a proportional coefficient $K_T$; and $K_I$/s represents derivative processing, involving a derivative coefficient $K_I$. A first processing result obtained by the integral processing, a second processing result obtained by the proportional processing, and a third processing result obtained by the derivative processing are added to obtain a first sum, and the first sum is input into the low-pass filter for low-pass filtering. In Fig. 2, $1/(K_J s + K_D)$ represents low-pass filtering, involving parameters $K_J$ and $K_D$. A fourth processing result output by the low-pass filter is a per-unit value. The fourth processing result is added to a per-unit value 1 of a feed-forward signal to obtain a second sum, and the second sum is multiplied by an angular frequency conversion value $\omega$ base to obtain an angular frequency $\omega$vsg, where the angular frequency $\omega$vsg is a nominal value. The derivative processing is performed on the angular frequency $\omega$vsg to obtain a control phase $\theta$vsg, where 1/s in Fig. 2 represents the derivative processing.

The reactive power control closed-loop may include a second proportional integral derivative control unit. Fig. 3 is a logical schematic diagram of an example of a reactive power control closed-loop provided in an embodiment of the present disclosure. As shown in Fig. 3, the difference $\Delta Q$ between the given value of the reactive power and the actual value of the reactive power can be input into the second proportional integral derivative control unit for proportional integral derivative processing. In Fig. 3, $K_E$s represents integral processing, involving an integral coefficient $K_E$; $K_T$ represents proportional processing, involving a proportional coefficient $K_T$; and $K_I$/s represents derivative processing, involving a derivative coefficient $K_I$. A fifth processing result obtained by the integral processing, a sixth processing result obtained by the proportional processing, and a seventh processing result obtained by the derivative processing are added to obtain a third sum, which is a per-unit value. The third sum is added to a per-unit value 1 of a feed-forward signal to obtain a fourth sum, and the fourth sum is multiplied by an amplitude conversion value Ubase to obtain a control amplitude Uvsg.

In the embodiments of the present disclosure, the cut-off frequency of the active power control closed-loop can be reduced by configuring the proportional coefficient of the first proportional integral derivative control unit, the integral coefficient of the first proportional integral derivative control unit, a gain coefficient of the low-pass filter, and an inertia time constant of the low-pass filter. Specifically, at least one of the proportional coefficient or the integral coefficient configured for the first proportional integral derivative control unit, and/or the gain coefficient and the inertia time constant configured for the low-pass filter, make the cut-off frequency of the frequency reduced active power control closed-loop less than or equal to the first preset value.

The cut-off frequency of the reactive power control closed-loop can be reduced by configuring the proportional coefficient of the second proportional integral derivative control unit and the integral coefficient of the second proportional integral derivative control unit. Specifically, at least one of the proportional coefficient or the integral coefficient configured for the second proportional integral derivative control unit makes the cut-off frequency of the frequency reduced reactive power control closed-loop less than or equal to the first preset value.

Specific configuration methods for the proportional coefficient of the first proportional integral derivative control unit, the integral coefficient of the first proportional integral derivative control unit, the gain coefficient of the low-pass filter, the inertia time constant of the low-pass filter, the proportional coefficient of the second proportional integral derivative control unit, and the integral coefficient of the second proportional integral derivative control unit will be explained in detail below.

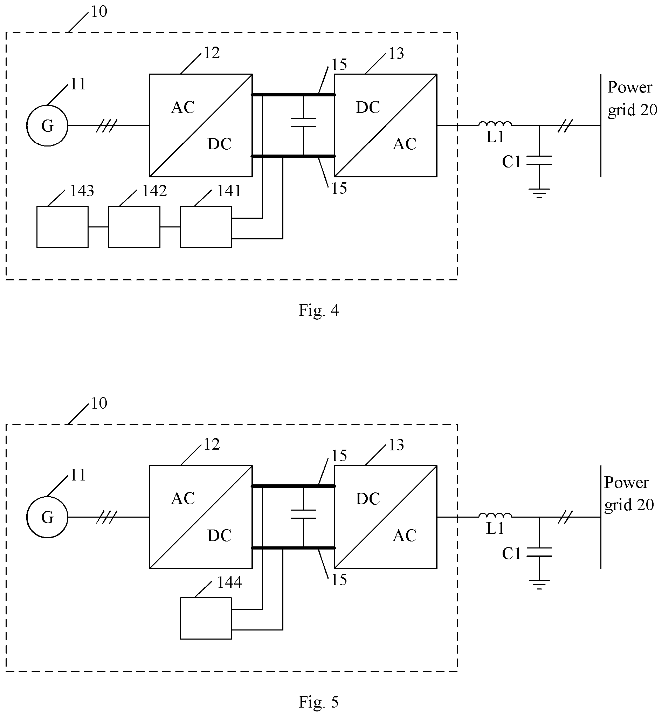

In some embodiments, the energy storage device 14 in the above embodiments may be implemented as a flywheel device. Fig. 4 is a schematic diagram of a grid-forming wind turbine provided in another embodiment of the present disclosure. Fig. 4 differs from Fig. 1 in that the energy storage device 14 shown in Fig. 4 may include an electrical energy converter 141, an electric motor 142, and a flywheel 143.

In the case that the frequency of the power grid 20 does not attenuate and the electrical energy generated by the generator 11 is sufficient, the electrical energy converter 141 can convert the electrical energy of the direct-current bus 15 into electrical energy that meets the requirements of the electric motor 142, and the electric motor 142 is driven by the electrical energy converted by the electrical energy converter 141, to drive the flywheel 143 to rotate, that is, the electrical energy is converted into mechanical energy for storage.

In the case that the frequency of the power grid 20 attenuates, the flywheel 143 rotates to drive the electric motor 142 to generate electrical energy, and the electrical energy converter 141 converts the electrical energy generated by the electric motor 142 into electrical energy that meets the requirements of the direct-current bus 15, that is, the mechanical energy is converted into electrical energy for release, to provide frequency and inertia support for the power grid 20.

In some embodiments, the energy storage device 14 may be implemented as a battery module. Fig. 5 is a schematic diagram of a grid-forming wind turbine provided in still another embodiment of the present disclosure. Fig. 5 differs from Fig. 1 in that the energy storage device 14 shown in Fig. 5 may include a battery module 144. The battery module 144 may include at least one battery, which is not limited here. In the case that the battery module 144 includes two or more batteries, the connection method of the batteries in the battery module 144 is not limited. In the case that the energy storage device 14 includes the battery module 144, a special electrical energy converter is not required between the battery module 144 and the direct-current bus, which can further simplify the structure of the grid-forming wind turbine.

In the case that the frequency of the power grid 20 does not attenuate and the electrical energy generated by the generator 11 is sufficient, the direct-current bus 15 can charge the battery module 144.

In the case that the frequency of the power grid 20 attenuates, the battery module 144 can release electrical energy to provide frequency and inertia support for the power grid 20.

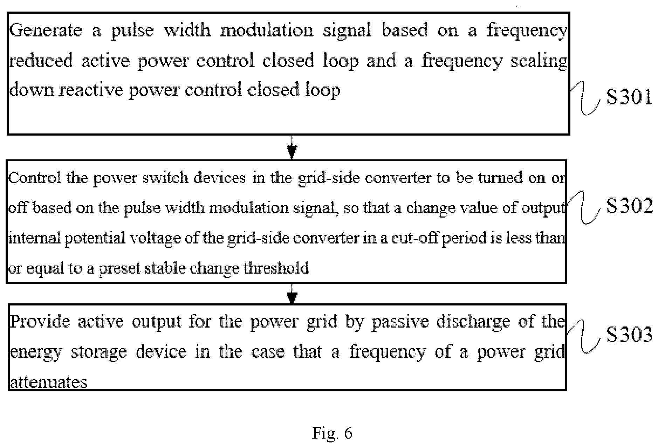

A control method for the grid-forming wind turbine in the above embodiments will be explained below. The second aspect of the present disclosure provides a control method for a grid-forming wind turbine. The method may be executed by the grid-side converter in the grid-forming wind turbine in the above embodiments. Further, the method may be executed by the control module of the grid-side converter in the grid-forming wind turbine in the above embodiments. Fig. 6 is a flowchart of a control method for a grid-forming wind turbine provided in an embodiment of the present disclosure. As shown in Fig. 6, the control method for the grid-forming wind turbine may include steps S301 to S303.

In step S301, a pulse width modulation signal is generated based on a frequency reduced active power control closed-loop and a frequency reduced reactive power control closed-loop.

A cut-off frequency of the frequency reduced active power control closed-loop and a cut-off frequency of the frequency reduced reactive power control closed-loop are less than or equal to a first preset value.

In some examples, the cut-off frequency of the frequency reduced active power control closed-loop and the cut-off frequency of the frequency reduced reactive power control closed-loop are less than or equal to a second preset value.

In step S302, the power switch devices in the grid-side converter is controlled to be turned on or off based on the pulse width modulation signal, so that a change value of output internal potential voltage of the grid-side converter in a cut-off period is less than or equal to a preset stable change threshold.

The stable change threshold is a change value threshold used for representing and determining whether the output internal potential voltage is stable.

In step S303, active output is provided for the power grid by passive discharge of the energy storage device in the case that a frequency of a power grid attenuates.

The specific content of steps S301 to S303 can be referred to the relevant explanations in the above embodiments, and will not be repeated here.

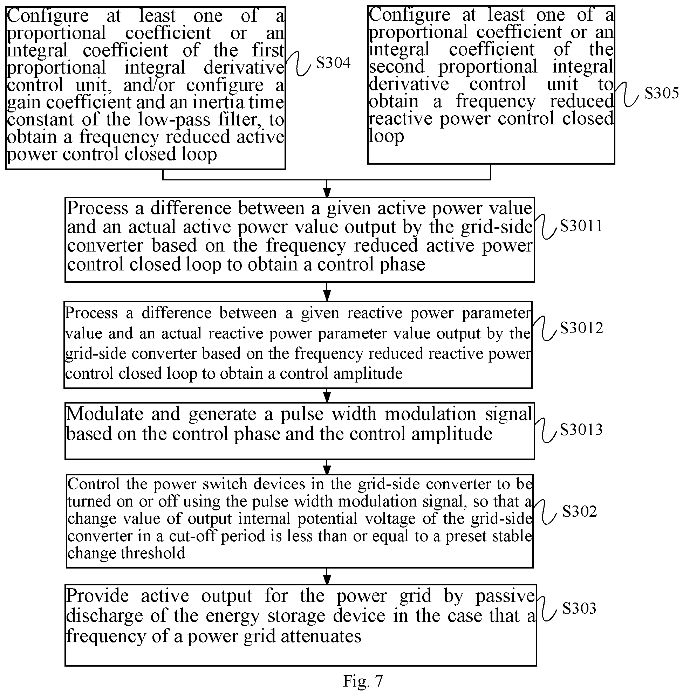

In some embodiments, the active power control closed-loop includes a first proportional integral derivative control unit and a low-pass filter, and the reactive power control closed-loop includes a second proportional integral derivative control unit. Fig. 7 is a flowchart of a control method for a grid-forming wind turbine provided in another embodiment of the present disclosure. Fig. 7 differs from Fig. 6 in that the control method for the grid-forming wind turbine shown in Fig. 7 further includes steps S304 and S305, and step S301 in Fig. 6 can be specifically refined into steps S3011 to S3013 in Fig. 7.

In step S304, at least one of a proportional coefficient or an integral coefficient of the first proportional integral derivative control unit, and/or, a gain coefficient and an inertia time constant of the low-pass filter is configured, to obtain a frequency reduced active power control closed-loop.

For the configuration of the first proportional integral derivative control unit, a desired cut-off frequency of the frequency reduced active power control closed-loop, i.e., the target cut-off frequency, can be first obtained, an appropriate proportional coefficient and integral coefficient of the first proportional integral derivative control unit can be calculated based on the target cut-off frequency and a transfer function of an active power control closed-loop, and the appropriate proportional coefficient and integral coefficient of the first proportional integral derivative control unit can be configured in the first proportional integral derivative control unit. Specifically, the target cut-off frequency is obtained, and at least one of a first target proportional coefficient or a first target integral coefficient corresponding to the target cut-off frequency is calculated based on a corresponding relationship between the proportional coefficient and integral coefficient in the transfer function of the active power control closed-loop and the cut-off frequency of the active power control closed-loop; the first target proportional coefficient is configured as the proportional coefficient of the first proportional integral derivative control unit, and/or, the first target integral coefficient is configured as the integral coefficient of the first proportional integral derivative control unit. The target cut-off frequency is less than or equal to the first preset value. The first target proportional coefficient includes a proportional coefficient that enables the cut-off frequency of the active power control closed-loop to reach the target cut-off frequency. The first target integral coefficient includes an integral coefficient that enables the cut-off frequency of the active power control closed-loop to reach the target cut-off frequency.

The transfer function of the active power control closed-loop can be determined based on a specific architecture of the active power control closed-loop, and is not limited here. For example, the transfer function of the active power control closed-loop can be expressed as follows (1) to (5):

$$G_{NFP}(s) = \frac{-Ms}{MNs^2+1} \qquad (1)$$

$$M = C_{dc}u_{dc0}U_{dc_{base}}G_{PID}(s) \qquad (2)$$

$$G_{PID}(s) = K_T + K_I/s + K_E s \qquad (3)$$

$$N = \frac{1}{\omega_{base}K_x} \qquad\qquad (4)$$

$$K_x = U^2/X_L \qquad\qquad (5)$$

Here, $C_{dc}$ represents a capacitance value of the direct-current bus; $u_{dc0}$ and $U_{dc_{base}}$ represent steady-state direct-current bus voltage and direct-current voltage reference value respectively; $K_T$ represents a proportional coefficient; $K_I$ represents an integral coefficient; $K_E$ represents a derivative coefficient; $\omega_{base}$ represents an internal potential angular frequency reference value of the power grid; $K_x$ represents a coefficient between a phase angle difference and a power increment; U represents an amplitude of alternating-current voltage; $X_L$ represents an impedance.

For the configuration of the low-pass filter, an appropriate gain coefficient and inertia time constant can be obtained based on a rotor motion equation of the generator of the grid-forming wind turbine, and the appropriate gain coefficient and inertia time constant can be configured in the low-pass filter. Specifically, a rotational inertia of the generator and a damping coefficient of the generator in the rotor motion equation of the generator are obtained; a target gain coefficient and a target inertia time constant are obtained based on the rotational inertia of the generator and the damping coefficient of the generator; the target gain coefficient and the target inertia time constant are configured as the gain coefficient and inertia time constant of the low-pass filter respectively. The target gain coefficient includes a gain coefficient that enables the cut-off frequency of the active power control closed-loop to reach the target cut-off frequency. The target inertia time constant includes an inertia time constant that enables the cut-off frequency of the active power control closed-loop to reach the target cut-off frequency.

The rotor motion equation can be expressed as equation (6) below:

$$J\frac{d\omega}{dt} = T_m - T_e - D(\omega - \omega_g) \qquad\qquad (6)$$

Here, J represents the rotational inertia of the generator; $T_m$ represents a mechanical torque of the generator; $T_e$ represents an electromagnetic torque of the generator; D represents the damping coefficient of the generator; $\omega$ represents an angular frequency of a generator rotor; and $\omega_g$ represents a rated angular frequency of the power grid. It should be noted that the value of each parameter in equation (6) is a per-unit value.

In some examples, the first target proportional coefficient can be configured as the proportional coefficient of the first proportional integral derivative control unit, so that the cut-off frequency of the frequency reduced active power control closed-loop is less than or equal to the first preset value; or the first target integral coefficient can be configured as the integral coefficient of the first proportional integral derivative control unit, so that the cut-off frequency of the frequency reduced active power control closed-loop is less than or equal to the first preset value; or the target gain coefficient and the target inertia time constant can be configured as the gain coefficient and inertia time constant of the low-pass filter respectively, so that the cut-off frequency of the frequency reduced active power control closed-loop is less than or equal to the first preset value.

In other examples, the first target proportional coefficient and the first target integral coefficient can be configured as the proportional coefficient and integral coefficient of the first proportional integral derivative control unit respectively, so that the cut-off frequency of the frequency reduced active power control closed-loop is less than or equal to the first preset value; or the first target proportional coefficient, the target gain coefficient, and the target inertia time constant can be configured as the proportional coefficient of the first proportional integral derivative control unit and the gain coefficient and inertia time constant of the low-pass filter respectively, so that the cut-off frequency of the frequency reduced active power control closed-loop is less than or equal to the first preset value; or the first target integral coefficient, the target gain coefficient, and the target inertia time constant can be configured as the integral coefficient of the first proportional integral derivative control unit and the gain coefficient and inertia time constant of the low-pass filter respectively, so that the cut-off frequency of the frequency reduced active power control closed-loop is less than or equal to the first preset value; or the first target proportional coefficient, the first target integral coefficient, the target gain coefficient, and the target inertia time constant can be configured as the proportional coefficient and integral coefficient of the first proportional integral derivative control unit and the gain coefficient and inertia time constant of the low-pass filter respectively, so that the cut-off frequency of the frequency reduced active power control closed-loop is less than or equal to the first preset value.

In step S305, at least one of a proportional coefficient or an integral coefficient of the second proportional integral derivative control unit is configured to obtain a frequency reduced reactive power control closed-loop.

For the configuration of the second proportional integral derivative control unit, a desired cut-off frequency of the frequency reduced reactive power control closed-loop, namely, a target cut-off frequency, can be first obtained, an appropriate proportional coefficient and integral coefficient of the second proportional integral derivative control unit can be calculated based on the target cut-off frequency and a transfer function of a reactive power control closed-loop, and the appropriate proportional coefficient and integral coefficient of the second proportional integral derivative control unit can be configured in the second proportional integral derivative control unit. Specifically, the target cut-off frequency is obtained, and at least one of a second target proportional coefficient or a second target integral coefficient corresponding to the target cut-off frequency is calculated based on a corresponding relationship between the proportional coefficient and integral coefficient in the transfer function of the reactive power control closed-loop and the cut-off frequency of the reactive power control closed-loop; the second target proportional coefficient is configured as the proportional coefficient of the second proportional integral derivative control unit, and/or the second target integral coefficient is configured as the integral coefficient of the second proportional integral derivative control unit. The second target proportional coefficient includes a proportional coefficient that enables the cut-off frequency of the reactive power control closed loop to reach the target cut-off frequency. The second target integral coefficient includes an integral coefficient that enables the cut-off frequency of the reactive power control closed-loop to reach the target cut-off frequency.

The transfer function of the reactive power control closed-loop can be determined based on a specific architecture of the reactive power control closed-loop, and is not limited here.

In some examples, the second target proportional coefficient can be configured as the proportional coefficient of the second proportional integral derivative control unit, so that the cut-off frequency of the frequency reduced reactive power control closed-loop is less than or equal to the first preset value; or the second target integral coefficient can be configured as the integral coefficient of the second proportional integral derivative control unit, so that the cut-off frequency of the frequency reduced reactive power control closed-loop is less than or equal to the first preset value; or the second target proportional coefficient and the second target integral coefficient can be configured as the proportional coefficient and integral coefficient of the second proportional integral derivative control unit respectively, so that the cut-off frequency of the frequency reduced reactive power control closed-loop is less than or equal to the first preset value.

In step S3011, a difference between a given active power value and an actual active power value output by the grid-side converter is processed based on the frequency reduced active power control closed-loop to obtain a control phase.

In step S3012, a difference between a given reactive power parameter value and an actual reactive power parameter value output by the grid-side converter is processed using the frequency reduced reactive power control closed loop to obtain a control amplitude.

In step S3013, a pulse width modulation signal is modulated and generated based on the control phase and the control amplitude.

The specific content of steps S3011 to S3013 can be referred to the relevant explanations in the above embodiments, and will not be repeated here.

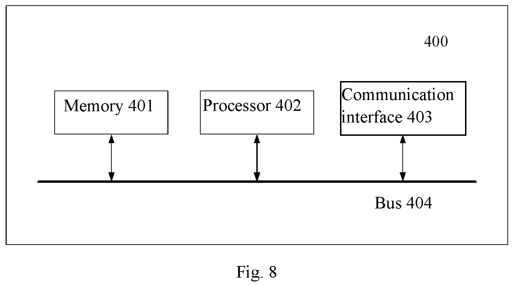

The third aspect of the present disclosure further provides a controller for a grid-side converter. Fig. 8 is a schematic diagram of a controller for a grid-side converter provided in an embodiment of the present disclosure. As shown in Fig. 8, the controller 400 for a grid-side converter includes a memory 401, a processor 402, and a computer program stored in the memory 401 and executable on the processor 402.

In some examples, the processor 402 may be a central processing unit (CPU) or an disclosure specific integrated circuit (ASIC), or may be configured to implement one or more integrated circuits in the embodiments of the present disclosure.

The memory 401 may be a read-only memory (ROM), a random-access memory (RAM), a magnetic disk storage medium device, an optical storage medium device, a flash memory device, or an electrical, optical, or other physical/tangible memory device. Therefore, typically, the memory includes one or more tangible (non-transient) computer-readable storage media (such as memory devices) encoded with software including computer executable instructions, and the software, when executed (for example, by one or more processors), can perform the operation described with reference to the method for controlling a grid-forming wind turbine in the embodiments of the present disclosure.

The processor 402 reads executable program code stored in the memory 401 to run the computer program corresponding to the executable program code, so as to implement the method for controlling a grid-forming wind turbine in the above embodiments.

In some examples, the controller 400 for a grid-side converter may further include a communication interface 403 and a bus 404. As shown in Fig. 8, the memory 401, the processor 402, and the communication interface 403 are connected and communicate with each other by the bus 404.

The communication interface 403 is mainly configured to implement communication between various modules, apparatuses, units, and/or devices in the embodiments of the present disclosure. Input and/or output devices can also be connected by the communication interface 403.

The bus 404 includes hardware, software, or both, to couple the components of the controller 400 for a grid-side converter together. By way of example and not limitation, the bus 404 may be an accelerated graphics port (AGP) or other graphics bus, an enhanced industry standard architecture (EISA) bus, a front side bus (FSB), a hyper transport (HT) interconnect, an industry standard architecture (ISA) bus, an infinite bandwidth interconnect, a low pin count (LPC) bus, a memory bus, a micro channel architecture (MCA) bus, a peripheral component interconnect (PCI) bus, a PCI-Express (PCI-E) bus, a serial advanced technology attachment (SATA) bus, a video electronics standards association local (VLB) bus, or any other suitable bus, or a combination of two or more of the above. Where appropriate, the bus 404 may include one or more buses. Although the embodiments of the present disclosure describe and show a specific bus, the present disclosure considers any suitable bus or interconnect.

Embodiments of the present disclosure further provide a computer-readable storage medium, storing computer program instructions that, when executed by a processor, can implement the method for controlling a grid-forming wind turbine in the above embodiments and achieve the same technical effects, which will not be repeated here in order to avoid repetition. The computer-readable storage medium may be a non-transient computer-readable storage medium, such as a read-only memory (ROM), a random access memory (RAM), a magnetic disk, or an optical disk.

It should be noted that the various embodiments in this specification are described in a progressive manner, the same or similar parts between the various embodiments may refer to each other, and each embodiment focuses on the differences from other embodiments. For the embodiments of the control method, the controller for a grid-side converter, and the computer-readable storage medium, relevant parts can refer to the description section of the embodiments of the grid-forming wind turbine. The present disclosure is not limited to the specific steps and structures described above and shown in the figures. Those skilled in the art can make various changes, modifications, and additions, or change the order of steps after understanding the gist of the present disclosure. And, for the sake of conciseness, detailed descriptions of known technologies are omitted here.

The above describes various aspects of the present disclosure with reference to the flowchart and/or block diagram of the method, apparatus (system), and computer program product according to the embodiments of the present disclosure. It should be understood that each box in the flowchart and/or block view and a combination of boxes in the flowchart and/or block view can be implemented by computer program instructions. These computer program instructions can be provided to a processor of a general-purpose computer, a dedicated computer, or other programmable data processing apparatuses to produce a machine, which enables the instructions executed by the processor of the computer or other programmable data processing apparatuses to implement the functions/actions specified in one or more boxes of the flowchart and/or block view. Such a processor may be, but is not limited to a general-purpose processor, a dedicated processor, a special disclosure processor, or a field programmable logic circuit. It can also be understood that each box in the block view and/or flowchart and a combination of boxes in the block view and/or flowchart can be implemented by dedicated hardware that executes specified functions or actions, or by a combination of dedicated hardware and computer instructions.

Those skilled in the art should understand that the above embodiments are all illustrative but not restrictive. Different technical features appearing in different embodiments can be combined to achieve beneficial effects. Those skilled in the art should be able to understand and implement other modified embodiments of the disclosed embodiments after studying the drawings, description, and claims. In the claims, the term "comprise" does not exclude other apparatuses or steps; the quantifier "one" does not exclude more; and the terms "first" and "second" are used to denote names rather than to indicate any specific order. Any reference numerals in the claims should not be construed as limiting the scope of protection. The functions of a plurality of portions appearing in the claims can be implemented by a single hardware or software module. The appearance of some technical features in different dependent claims does not mean that these technical features cannot be combined to achieve beneficial effects.

**Claims**

1. A grid-forming wind turbine, comprising:

   a generator;
   a generator-side converter electrically connected to the generator;
   a grid-side converter electrically connected to the generator-side converter by a direct-current bus; and
   an energy storage device connected to the direct-current bus for charging or discharging;
   wherein the grid-side converter comprises:

   a control module, configured to generate a pulse width modulation signal based on a frequency reduced active power control closed-loop and a frequency reduced reactive power control closed-loop, a cut-off frequency of the frequency reduced active power control closed - loop and a cut-off frequency of the frequency reduced reactive power control closed-loop being less than or equal to a first preset value; and
   a power switch module, comprising multiple power switch devices which are configured to be turned on or off under the control of the pulse width modulation signal, so that a change value of output internal potential voltage of the grid-side converter within a cut-off period is less than or equal to a preset stable change threshold that is a change value threshold for characterizing and determining whether the output internal potential voltage is stable,

in the case that a frequency of a power grid attenuates, the energy storage device being passively discharged to provide active output for the power grid electrically connected to the grid-forming wind turbine.

2. The grid-forming wind turbine according to claim 1, wherein the control module comprises:

a processing unit, configured to process a difference between a given value of active power and an actual value of active power output by the grid-side converter based on the frequency reduced active power control closed-loop to obtain a control phase, and process a difference between a given value of reactive power parameter and an actual value of reactive power parameter output by the grid-side converter based on the frequency reduced reactive power control closed-loop to obtain a control amplitude; and

a modulation unit, configured to modulate and generate the pulse width modulation signal based on the control phase and the control amplitude.

3. The grid-forming wind turbine according to claim 1, wherein the active power control closed-loop comprises a first proportional integral derivative control unit and a low-pass filter, and the reactive power control closed-loop comprises a second proportional integral derivative control unit,

at least one of a proportional coefficient and an integral coefficient configured for the first proportional integral derivative control unit, and/or, a gain coefficient and an inertia time constant configured for the low-pass filter, make the cut-off frequency of the frequency reduced active power control closed-loop less than or equal to a first preset value, and

at least one of a proportional coefficient and an integral coefficient configured for the second proportional integral derivative control unit makes the cut-off frequency of the frequency reduced reactive power control closed-loop less than or equal to the first preset value.

4. The grid-forming wind turbine according to claim 3, wherein the low-pass filter comprises a first-order low-pass filter or a second-order low-pass filter.

5. The grid-forming wind turbine according to claim 1, wherein,

the energy storage device comprises an electrical energy converter, an electric motor, and a flywheel, the electrical energy converter being connected to the direct-current bus, and the flywheel being connected to the electrical energy converter by the electric motor; or

the energy storage device comprises a battery module, which is connected to the direct-current bus.

6. The grid-forming wind turbine according to any one of claims 1 to 5, wherein the cut-off frequency of the frequency reduced active power control closed-loop and the cut-off frequency of the frequency reduced reactive power control closed-loop are less than or equal to a second preset value, which is less than the first preset value.

7. A control method for a grid-forming wind turbine, applied to the grid-side converter in the grid-forming wind turbine according to claim 1, the grid-forming wind turbine being configured to be electrically connected to a power grid, the control method comprising:

generating a pulse width modulation signal based on a frequency reduced active power control closed-loop and a frequency reduced reactive power control closed-loop, a cut-off frequency of the frequency reduced active power control closed-loop and a cut-off frequency of the frequency reduced reactive power control closed-loop being less than or equal to a first preset value;

controlling the power switch devices in the grid-side converter to be turned on or off based on the pulse width modulation signal, so that a change value of output internal potential voltage of the grid-side converter within a cut-off period is less than or equal to a preset stable change threshold that is a change value threshold for characterizing and determining whether the output internal potential voltage is stable; and

providing active output for the power grid by passive discharge of the energy storage device in the case that a frequency of the power grid attenuates.

8. The control method according to claim 7, wherein the active power control closed-loop comprises a first proportional integral derivative control unit and a low-pass filter, the reactive power control closed-loop comprises a second proportional integral derivative control unit, and
before generating a pulse width modulation signal based on a frequency reduced active power control closed-loop and a frequency reduced reactive power control closed-loop, the method further comprises:

configuring at least one of a proportional coefficient and an integral coefficient of the first proportional integral derivative control unit, and/or, configuring a gain coefficient and an inertia time constant of the low-pass filter, to obtain the frequency reduced active power control closed-loop; and
configuring at least one of a proportional coefficient and an integral coefficient of the second proportional integral derivative control unit to obtain the frequency reduced reactive power control closed-loop.

9. The control method according to claim 8, wherein
the configuring at least one of a proportional coefficient and an integral coefficient of the first proportional integral derivative control unit comprises:

obtaining a target cut-off frequency, and calculating at least one of a first target proportional coefficient or a first target integral coefficient corresponding to the target cut-off frequency based on a corresponding relationship between a proportional coefficient and an integral coefficient in a transfer function of the active power control closed-loop and a cut-off frequency of the active power control closed-loop, the first target cut-off frequency being less than or equal to the first preset value, and
configuring the first target proportional coefficient as the proportional coefficient of the first proportional integral derivative control unit, and/or, configuring the first target integral coefficient as the integral coefficient of the first proportional integral derivative control unit;
the configuring a gain coefficient and an inertia time constant of the low-pass filter comprises:

obtaining a rotational inertia and a damping coefficient of the generator in a rotor motion equation of the generator;
obtaining a target gain coefficient and a target inertia time constant based on the rotational inertia of the generator and the damping coefficient of the generator, and
configuring the target gain coefficient and the target inertia time constant as the gain coefficient and inertia time constant of the low-pass filter respectively;
the configuring at least one of a proportional coefficient and an integral coefficient of the second proportional integral derivative control unit comprises:

obtaining a target cut-off frequency, and calculating at least one of a second target proportional coefficient and a second target integral coefficient corresponding to the target cut-off frequency based on a corresponding relationship between a proportional coefficient and an integral coefficient in a transfer function of a reactive power control closed-loop and a cut-off frequency of the reactive power control closed-loop, and
configuring the second target proportional coefficient as the proportional coefficient of the second proportional integral derivative control unit, and/or, configuring the second target integral coefficient as the integral coefficient of the second proportional integral derivative control unit.

10. The control method according to claim 7, wherein the generating a pulse width modulation signal based on a frequency reduced active power control closed-loop and a frequency reduced reactive power control closed-loop comprises:

processing a difference between a given value of active power and an actual value of active power output by the grid-side converter based on the frequency reduced active power control closed-loop to obtain a control phase;
processing a difference between a given value of reactive power parameter and an actual value of reactive power parameter output by the grid-side converter based on the frequency reduced reactive power control closed-loop to obtain a control amplitude; and
modulating and generating the pulse width modulation signal based on the control phase and the control amplitude.

11. The control method according to any one of claims 7 to 10, wherein the cut-off frequency of the frequency reduced active power control closed-loop and the cut-off frequency of the frequency reduced reactive power control closed-loop are less than or equal to a second preset value, which is less than the first preset value.

12. A controller for a grid-side converter, comprising: a processor and a memory storing computer program instructions, wherein
the computer program instructions, when executed by the processor, cause the control method for the grid-forming wind turbine according to any one of claims 7 to 11 to be implemented.

Fig. 1

Fig. 2

Fig. 3

Fig. 4

Fig. 5

Generate a pulse width modulation signal based on a frequency reduced active power control closed loop and a frequency scaling down reactive power control closed loop — S301

Control the power switch devices in the grid-side converter to be turned on or off based on the pulse width modulation signal, so that a change value of output internal potential voltage of the grid-side converter in a cut-off period is less than or equal to a preset stable change threshold — S302

Provide active output for the power grid by passive discharge of the energy storage device in the case that a frequency of a power grid attenuates — S303

Fig. 6

Configure at least one of a proportional coefficient or an integral coefficient of the first proportional integral derivative control unit, and/or configure a gain coefficient and an inertia time constant of the low-pass filter, to obtain a frequency reduced active power control closed loop ⟲ S304

Configure at least one of a proportional coefficient or an integral coefficient of the second proportional integral derivative control unit to obtain a frequency reduced reactive power control closed loop ⟲ S305

Process a difference between a given active power value and an actual active power value output by the grid-side converter based on the frequency reduced active power control closed loop to obtain a control phase ⟲ S3011

Process a difference between a given reactive power parameter value and an actual reactive power parameter value output by the grid-side converter based on the frequency reduced reactive power control closed loop to obtain a control amplitude ⟲ S3012

Modulate and generate a pulse width modulation signal based on the control phase and the control amplitude ⟲ S3013

Control the power switch devices in the grid-side converter to be turned on or off using the pulse width modulation signal, so that a change value of output internal potential voltage of the grid-side converter in a cut-off period is less than or equal to a preset stable change threshold ⟲ S302

Provide active output for the power grid by passive discharge of the energy storage device in the case that a frequency of a power grid attenuates ⟲ S303

Fig. 7

Fig. 8

## INTERNATIONAL SEARCH REPORT

International application No.

**PCT/CN2023/109819**

### A. CLASSIFICATION OF SUBJECT MATTER

H02J3/48(2006.01)i

According to International Patent Classification (IPC) or to both national classification and IPC

### B. FIELDS SEARCHED

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 变压: 风力发电, 幅值, 惯性, 惯性支撑, 虚拟同步发电, 逆变器, 降频, 降频处理, 截止频率, 内电势, 频率, 频率支撑, 无功功率, 相位, 有功功率, 支撑, 闭环, Grid-structured, converter, closed loop, active , reactive

### C. DOCUMENTS CONSIDERED TO BE RELEVANT

| Category* | Citation of document, with indication, where appropriate, of the relevant passages | Relevant to claim No. |
|---|---|---|
| PX | CN 116316904 A (BEIJING GOLDWIND SCIENCE & CREATION WINDPOWER EQUIPMENT CO., LTD.) 23 June 2023 (2023-06-23)<br>entire document | 1-12 |
| Y | CN 112636384 A (VERTIV TECHNOLOGY CO., LTD.) 09 April 2021 (2021-04-09)<br>description, paragraphs 44 to 120, figures 1-6 | 1-12 |
| Y | 鲁义彪 (LU, Yibiao). "基于虚拟同步发电机的逆变器控制策略研究 (Non-official translation: Research on Inverter Control Strategy based on Virtual Synchronous Generator)" 中国优秀硕士论文电子期刊网 (Non-official translation: Chinese Master's Theses Full-Text Electronic Journals Network), 15 April 2019 (2019-04-15),<br>pages 1-68 | 1-12 |
| Y | CN 110962666 A (CHINA ELECTRIC POWER RESEARCH INSTITUTE CO., LTD.) 07 April 2020 (2020-04-07)<br>entire document | 1-12 |

☑ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **29 October 2023** | **02 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/109819**

C.      DOCUMENTS CONSIDERED TO BE RELEVANT

| Category* | Citation of document, with indication, where appropriate, of the relevant passages | Relevant to claim No. |
|---|---|---|
| Y | CN 110048439 A (ZHENGZHOU ELECTRIC POWER COLLEGE et al.) 23 July 2019 (2019-07-23) entire document | 1-12 |
| A | CN 108683198 A (HEFEI UNIVERSITY OF TECHNOLOGY) 19 October 2018 (2018-10-19) entire document | 1-12 |
| A | CN 115102149 A (NORTH CHINA ELECTRIC POWER UNIVERSITY et al.) 23 September 2022 (2022-09-23) entire document | 1-12 |

Form PCT/ISA/210 (second sheet) (July 2022)

**INTERNATIONAL SEARCH REPORT**
Information on patent family members

International application No.

**PCT/CN2023/109819**

| Patent document cited in search report | | | Publication date (day/month/year) | Patent family member(s) | Publication date (day/month/year) |
|---|---|---|---|---|---|
| CN | 116316904 | A | 23 June 2023 | None | |
| CN | 112636384 | A | 09 April 2021 | None | |
| CN | 110962666 | A | 07 April 2020 | None | |
| CN | 110048439 | A | 23 July 2019 | None | |
| CN | 108683198 | A | 19 October 2018 | None | |
| CN | 115102149 | A | 23 September 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211319731